# EUROPEAN PATENT APPLICATION

(11) **EP 3 462 280 A2**
(43) Date of publication of application: **03.04.2019**
(21) Application number: 18187678.0
(22) Date of filing: 07.08.2018
(51) Int. Cl.: G06F 1/3287, G06F 1/3246

(54) **MOTION TRIGGERED SYSTEM POWER UP**

(30) Priority: 27.09.2017 US 201715717095
(71) Applicant: NXP USA, Inc., Austin TX 78735 (US)
(72) Inventor: AHMED, Firoz, 5656 AG Eindhoven (NL); HON, Yau Kin, 5656 AG Eindhoven (NL); LIU, Lianjun, 5656 AG Eindhoven (NL); SRIDHAR, Raghavendra N, 5656 AG Eindhoven (NL)
(74) Representative: Pomper, Till

(57) **Abstract**

A system in a device includes an electronic module configured to perform a function associated with the device, a power generation apparatus for generating electrical energy in response to motion of the device, and a switch element interposed between the electronic module and the power generation device. The switch element switches from a first state to a second state when the power generation apparatus generates the electrical energy. The electronic module is in a powered-off mode in which a power storage device is disconnected from the electronic module whenever the switch element is in the first state. The electronic module is switched to a powered-on mode in which the power storage device is in electrically connected to the electronic module whenever the switch element is in the second state.

## Description

### TECHNICAL FIELD OF THE INVENTION

The present invention relates generally to battery operated systems. More specifically, the present invention relates to the conservation of electrical power from the battery in a battery operated system.

### BACKGROUND OF THE INVENTION

A wide variety of electronic devices are supplied with electric power by non-rechargeable and chargeable batteries. Low power consumption is important to conserve and extend the service life of the battery in such devices. A technique for conserving battery power entails placing an electronic device in a sleep mode. The sleep mode is a low power mode for electronic devices in which the device discontinues power to unneeded systems. However, some battery power is consumed while sleeping in order to power some systems and to be able to respond to a wake-up event. Thus, periodic wake-up and return to sleep mode can drain a battery and shorten its service life. As the use of battery operated electronic devices rise, techniques for preventing unnecessary power consumption and reducing battery size becomes increasingly critical.

### BRIEF DESCRIPTION OF THE DRAWINGS

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.
FIG. 1 shows a top view of a motorized vehicle that implements integrated tire electronics systems;
FIG. 2 shows a simplified block diagram of a system that includes a tire pressure sensor module and a power generation apparatus in accordance with an embodiment;
FIG. 3 shows another block diagram of the system of FIG. 2; and
FIG. 4 shows a flowchart of a battery power conservation process in accordance with another embodiment.

### DETAILED DESCRIPTION

In overview, the present disclosure concerns a system that includes a power generation apparatus, a system (such as a tire pressure monitoring system) located inside a tire of a vehicle that includes the power generation apparatus, and a method of conserving electrical power within a system installed in a device. More particularly, a power generation apparatus in the form of an energy harvesting device is employed to convert ambient energy (e.g., motion, rotation, vibration) into electrical energy in response to motion of the device. This electrical energy is utilized to power a switch element which, in turn, is used to power up the system from a fully powered-off mode. After a predefined period when the energy harvesting device is no longer generating electrical energy (i.e., the device is no longer in motion), the switch element is de-energized which, in turn, removes power from the system so that it returns to the fully powered-off mode. Accordingly, the system is only in a powered-on mode when it is needed, thereby potentially extending the service life of a battery within the system.

The following description entails the implementation of the power generation apparatus and the switch element in connection with a tire pressure monitoring system (TPMS) in a non-limiting fashion. It should be understood, however, that the power generation apparatus and the switch element may be implemented within a wide variety of battery operated technologies, such as wearable electronics, and so forth.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It should be understood that the use of relational terms, if any, such as first and second, top and bottom, and the like are used solely to distinguish one from another entity or action without necessarily requiring or implying any actual such relationship or order between such entities or actions. Furthermore, some of the figures may be illustrated using various shading and/or hatching to distinguish the different elements produced within the various structural layers. These different elements within the structural layers may be produced utilizing current and upcoming microfabrication techniques of depositing, patterning, etching, and so forth. Accordingly, although different shading and/or hatching is utilized in the illustrations, the different elements within the structural layers may be formed out of the same material.

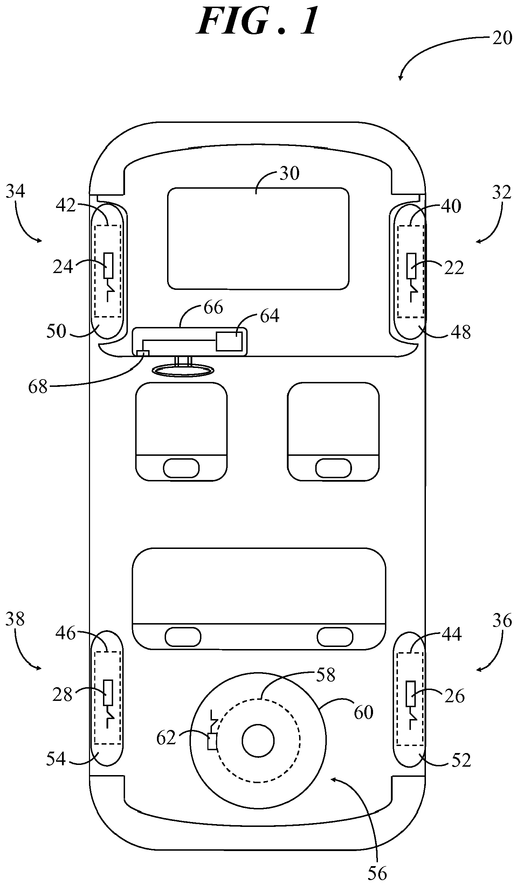

Referring to FIG. 1, FIG. 1 shows a top view of a motorized vehicle 20 that implements integrated tire electronics systems 22, 24, 26, 28 in accordance with an embodiment. In the configuration shown, motorized vehicle 20 is a car with a motor 30. However, vehicle 20 may be any type of motorized vehicle, such as a truck, semitrailer, sport utility vehicle, motorcycle, bus, electric vehicle, airplane, and the like.

Vehicle 20 is supported by four wheels 32, 34, 36, 38. Each wheel 32, 34, 36, 38 includes a rim 40, 42, 44, 46 upon which a tire 48, 50, 52, 54 is mounted. Vehicle 20 also includes a spare wheel 56 with a rim 58 and a tire 60. Each of wheels 32, 34, 36, 38 includes its corresponding integrated tire electronics system 22, 24, 26, 28. Similarly, wheel 56 can include an integrated tire electronics system 62. In the illustrated embodiment, each of integrated tire electronics systems 22, 24, 26, 28, 62 is mounted to a portion of the rim 40, 42, 44, 46, 58 of its wheel 32, 34, 36, 38, 56 that is exposed to the internal pressurized side of the corresponding tire 48, 50, 52, 54, 60.

Each integrated tire electronics system 22, 24, 26, 28, 62 includes an antenna for transmitting information pertaining to the corresponding tire 48, 50, 52, 54, 60 to a central controller system 64 mounted in an instrument panel 66. Controller system 64 evaluates the received information and suitably informs a driver of any anomalies by activating an indicator (e.g., a display 68 or a dashboard light) in instrument panel 66. Collectively, integrated tire electronics systems 22, 24, 26, 28, 62 and the vehicle-side controller system 64 and display 68 form a tire pressure monitoring system (TPMS) for vehicle 20.

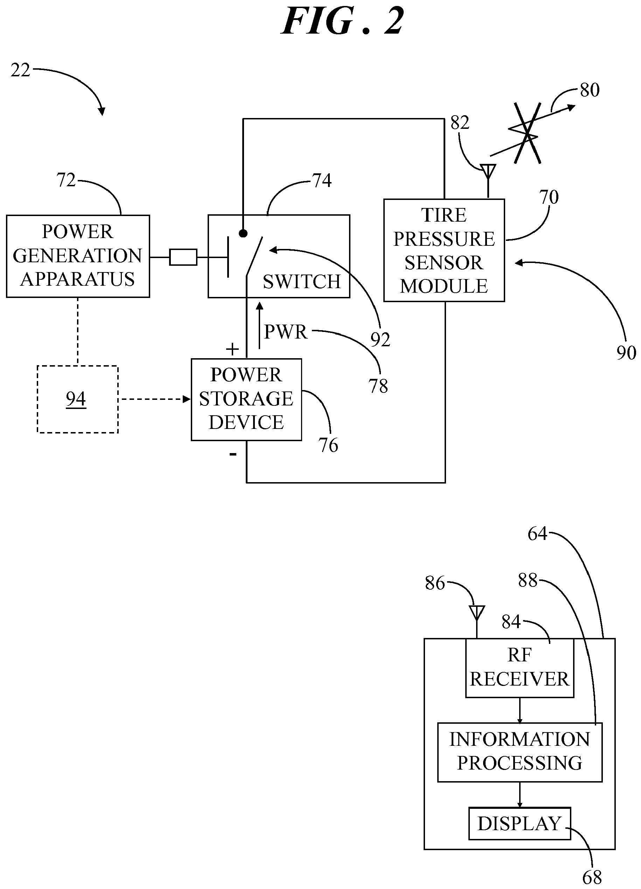

FIG. 2 shows a simplified block diagram of integrated tire electronics system 22 that includes an electronic module, in the form of a tire pressure sensor module 70, and a power generation apparatus 72 in accordance with an embodiment. A switch element 74 is interposed between tire pressure sensor module 70 and power generation apparatus 72. In an embodiment, a power storage device 76 may be a battery that provides electric power 78 (labeled PWR) to tire pressure sensor module 70 when switch element 74 is activated. Conversely, electric power 78 from power storage device 76 is removed from tire pressure sensor module 70 when switch element 74 is deactivated.

Tire pressure sensor module 70, power generation apparatus 72, switch element 74, and power storage device 76 may be enclosed in a protective housing (not shown) that is mounted onto rim 40 (FIG. 1) of wheel 32 (FIG. 1). Thus, integrated tire electronics system 22 is contained within the pressurized environment of tire 48. The following discussion presented in connection with FIG. 2 and the ensuing figures is described in connection with wheel 32 (FIG. 1) and integrated tire electronics system 22 for simplicity. It should be understood however, that the following discussion applies equivalently to integrated tire electronics systems 24, 26, 28, and 62 (FIG. 1).

Tire pressure sensor module 70 is an electronic module that is configured to perform a function associated with integrated tire electronics system 22. In this example, tire pressure sensor module 70 may sense the tire's pressure, process the pressure signal, and subsequently transmit an output signal 80 via an antenna 82 to central controller system 64. Central controller system 64 includes a radio frequency (RF) receiver 84 having an antenna 86 for receiving the transmitted output signal 80 and communicating output signal 80 to an information processing circuit 88 for further processing. Display 68 is connected to an output of information processing circuit 88 and presents the information derived by information processing circuit 88 at instrument panel 66 (FIG. 1) of vehicle 20 (FIG. 1).

A typical tire pressure sensor module (e.g., tire pressure sensor module 70) for a TPMS application is powered by a non-rechargeable battery (e.g., power storage device 76) because of its installation inside of tire 48. Due to the expense, inconvenience, and difficulty associated with servicing and/or replacing the battery, low power consumption is a key requirement for an integrated tire electronics system 22 of a TPMS. Further, extending the service life of the battery is desirable from a cost, reliability, safety, and environmental perspective.

A technique for consuming less power in a TPMS application, and thereby extending the service life of the battery, is to only transmit output signal 80 relatively infrequently, but just frequently enough so that central controller system 64 can fulfill the tire pressure monitoring function. However, TPMS is increasingly being adapted for utilization in electronic stability control of a vehicle. For use in electronic stability control, the frequency of transmission of output signal 80 to central controller system 64 has to be increased thereby resulting in even greater consumption of battery power.

Design efforts are increasingly focusing on eliminating the battery as the energy source for integrated tire electronics or at least extending the service life of the battery through the implementation of energy harvesting. An energy harvesting device converts ambient energy (e.g., motion, vibration, rotation, human power, solar, and so forth) into electrical energy. Typical power densities of energy harvesting devices are highly dependent upon the specific application (thereby affecting the size of the power generation apparatus) and the design of the power generation apparatus. Further, many energy harvesting devices generate very little power. In a TPMS application, the energy generating efficiency of typical energy harvesting devices may not be sufficient to generate enough electrical energy to power tire pressure sensor module 70.

Embodiments disclosed herein largely limit unnecessary power consumption when the operation of a TPMS system (and particularly the integrated tire electronics system 22) is not needed, such as when vehicle 20 (FIG. 1) is not moving for a certain period of time. In particular, embodiments combine energy harvesting and a switching feature to switch tire pressure sensor module 70 from a fully powered-off mode to a powered-on mode.

It should be observed in FIG. 2 that an "X" is drawn through the arrow representing output signal 80. In accordance with an embodiment, tire pressure sensor module 70 is typically in a fully powered-off mode 90 in which none of the components of tire pressure sensor module 70 receives power from power storage device 76 whenever switch element 74 is deactivated or in an open condition, referred to herein as a first state 92. That is, when switch element 74 is in first state 92, power storage device 76 is disconnected from tire pressure sensor module 70 so that tire pressure sensor module 70 is prevented from receiving and utilizing electric power 78 from power storage device 76. Thus, when tire pressure sensor module 70 is in powered-off mode 90, tire pressure sensor module 70 cannot perform its functions (e.g., sense the tire's pressure, process the pressure signal, and subsequently transmit output signal 80).

Power generation apparatus 72 is configured to generate electrical energy in response to motion of the device (e.g., vehicle 20 of FIG. 1). More particularly, power generation apparatus 72 is an energy harvesting device that converts ambient energy into electrical energy. In this example, power generation apparatus 72 may be any conventional or upcoming energy harvesting device that generates electrical energy from the vibration, deformation and/or rotation of tire 48. Thus, power generation apparatus 72 generates electrical energy in response to motion of tire 48 of vehicle 20 (FIG. 1). The electrical energy generated by power generation apparatus 72 is sufficient to power switch element 74, thereby switching it from the open first state 92 to a second (e.g., closed) state. Closure of switch element 74 completes the circuit between power storage device 76 and tire pressure sensor module 70 so that tire pressure sensor module 70 is switched to a powered-on mode.

Accordingly, power generation apparatus 72 is not used to directly power tire pressure sensor module 70. Instead, the electrical energy generated by power generation apparatus 72 is used to energize switch element 74 so that power 78 from power storage device 76 can be routed or otherwise provided to tire pressure sensor module 70. In some embodiments, the electrical energy generated by power generation apparatus 72 may be greater than that needed to energy switch element 74. In such a situation, this excess electrical energy may be provided to recharge power storage device 76 and/or to charge a secondary power storage device 94 (e.g., battery, capacitor, supercapacitor, and the like) to supplement electric power 78 provided by power storage device 76 to tire pressure sensor module 70.

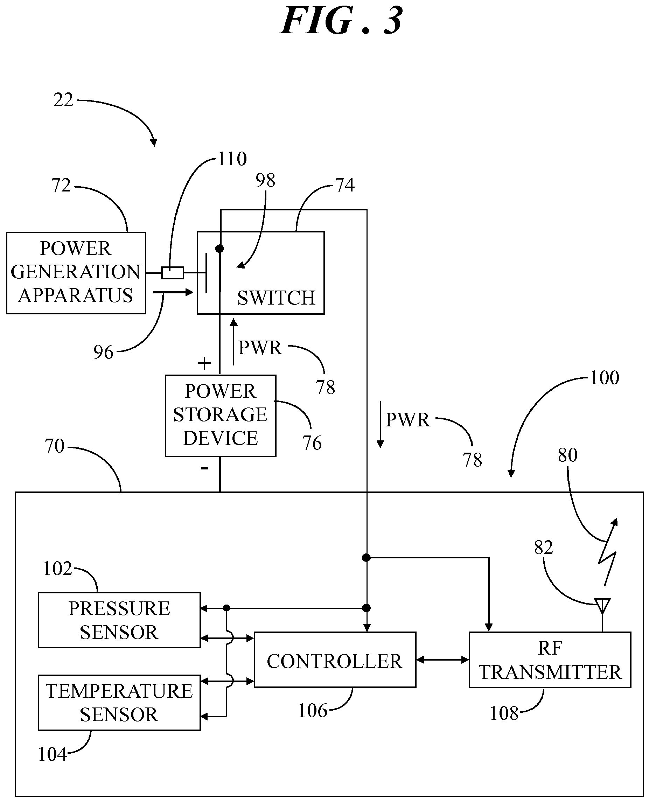

Referring now to FIG. 3, FIG. 3 shows another block diagram of integrated tire electronics system 22. In this example, power generation apparatus 72 generates electrical energy 96 in response to motion of tire 48 (FIG. 1), and hence vehicle 20 (FIG. 1). Electrical energy 96 from power generation apparatus 72 energizes switch element 74 causing switch element 74 to switch from the open first state 92 (FIG. 2) to a second (closed) state 98. In turn, electric power 78 is supplied to tire pressure sensor module 70 from power storage device 76 and tire pressure sensor module 70 is switched from powered-off mode 90 (FIG. 2) to a powered-on mode 100.

In the block diagram of FIG. 3, when switch element 74 is in second state 98, a positive battery output of power storage device 76 is in electrical communication with an input of tire pressure sensor module 70. The negative battery output of power storage device 76 may be connected to a common return of all modules within integrated tire electronics system 22. Electric power 78 from power storage device 76 may separately power inputs of, for example, a pressure sensor 102, a temperature sensor 104, a micro controller unit (MCU) or process controller 106, and an RF transmitter 108 having antenna 82. Power 78 may additionally or alternatively power other components (e.g., an acceleration sensor) not shown herein for simplicity.

In operation, pressure sensor 102 functions to sense tire pressure when pressure sensor 102 is powered. In one form, pressure sensor 102 may be a microelectromechanical systems (MEMS) pressure sensor suitable for positioning within tire 48. For example, a pressure sensor may be fabricated in silicon with the physical sensing mechanism being either a variable resistance or a variable capacitance. Similarly, when powered, temperature sensor 104 functions to sense the temperature of the air within tire 48. The temperature measurement may be done using variable capacitance, variable resistance, or a diode voltage.

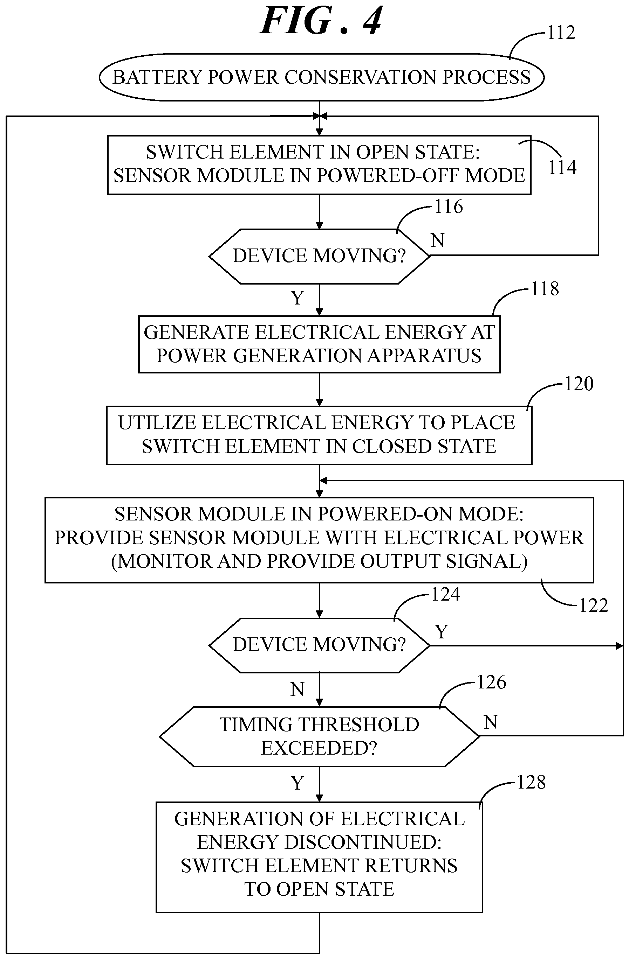

Process controller 106 can function to perform an analog-to-digital conversion of the outputs of pressure sensor 102 and temperature sensor 104, provide clock synchronization and control signals to sensors 102, 104, provide reference voltages, and perform correction of sensor errors and nonlinearity errors associated with the pressure and temperature measurements. Additionally, process controller 106 can function to gather pressure and temperature measurements at a given time interval and then send that data as output signal 80 via RF transmitter 132 at another time interval. For example, process controller 130 may provide a low pressure alarm signal to RF transmitter 108 when the air pressure within tire 48 falls below a predetermined value. Those skilled in the art will readily recognize that tire pressure sensor module 70 can have more than or less than the functional modules depicted in FIG. 4, and can have more than or less than the functionality described herein.

When tire 48, and hence vehicle 20, stops moving (i.e., is motionless), power generation apparatus 72 no longer generates electrical energy 96. Hence, switch element 74 is no longer powered by power generation apparatus 72. Additionally, switch element 74 is not powered by power storage device 76. Accordingly, switch element 74 returns to first state 92 (FIG. 2). In turn, tire pressure sensor module 70 returns to powered-off mode 90 (FIG. 2). Thus, power generation apparatus 72 and switch element 74 function collectively as a motion detector configured to determine whether tire 48 is moving or is motionless. That is, motion is detected when power generation apparatus 72 generates electrical energy 96 and a motionless condition is detected when power generation apparatus 72 no longer generates electrical energy 96.

Some embodiments may include a timing element 110 in communication with the motion detection capability of power generation apparatus 72 and switch element 74. In this example, timing element 110 is in the form of an energy storage reservoir or capacitor interposed between power generation apparatus 72 and switch element 74. At the onset of rotation of tire 48, power generation apparatus 72 will initially charge timing element 110 (capacitor) with electrical energy 96. Thereafter, electrical energy 96 will energize switch element 74 so that switch element 74 switches from first state 92 to second state 98 and, commensurately, tire pressure sensor module 70 enters powered-on mode 100. When power generation apparatus 72 no longer generates electrical energy 96 thereby indicating that tire 48 is motionless, timing element 110 (capacitor) will discharge and provide electrical energy 96 to switch element 74 for some period of time (i.e., a timing threshold). During this period of time during which timing element 110 is discharging, switch element 74 will remain in the closed second state 98 and tire pressure sensor module 70 will remain in powered-on mode 100. After timing element 110 is discharged, timing element 110 will effectively signal switch element 74 to return to the open first state 92 because insufficient electrical energy 96 is being provided to switch element 74 to keep it in the closed second state 98.

The size of the capacitor, for example, of timing element 110 may be suitably selected to discharge for a predetermined period of time, referred to herein as a timing threshold, after power generation apparatus 72 no longer generates electrical energy 96. Thus, switch element 74 remains in second state 98 to cause tire pressure sensor module 70 to remain in powered-on mode 100 whenever the motion detection capability of power generation apparatus 72 and switch element 74 determines that tire 48 is moving. Further, the built-in delay resulting from discharging timing element 110 causes switch element 74 to remain in second state 98 for a while after tire 48 becomes motionless to ensure that the motionless condition isn't temporary and thereby preclude an unnecessary return of powered-off mode 90 of tire pressure sensor module 70. Accordingly, tire pressure sensor module 70 is only operational when switch element 74 (powered by power generation apparatus 72) is in second state 98 and when the motion detection capability of power generation apparatus 72 and switch element 74 detects motion (within a certain designed in delay).

Alternative embodiments may include additional motion detection sensors and timing circuitry for identifying when the tire is in motion and for determining when the tire is motionless longer than the timing threshold. Alternatively, some tire pressure sensor modules can contain logic circuitry or software code in a memory such as a ROM for the purpose of identifying when the tire is in motion based solely on the pressure and temperature measurements. Additional motion detection sensors and circuitry and/or logic circuitry or software code may increase the complexity and commensurately the cost of such tire pressure sensor modules. Thus, by utilizing the motion detection capability of power generation apparatus 72 and switch element 74 along with timing element 110, the incorporation of motion detection sensors and circuitry and/or logic circuitry or software code in tire pressure sensor module 70 may be negated, thereby potentially reducing cost and complexity of tire pressure sensor module 70.

FIG. 4 shows a flowchart of a battery power conservation process 112 in accordance with another embodiment. Battery power conservation process 112 is implemented within a system that includes an electronic module, such as tire pressure sensor module 70, power generation apparatus 72, switch element 74, and power storage device 76 (e.g., battery). Thus, FIGs. 2 and 3 should be referred to in conjunction with the subsequent discussion of process 112. It should be understood however, that battery power conservation process 112 may be performed for systems other than a TPMS system.

At a block 114 of battery power conservation process 112, switch element 74 is in the open first state 92 so that tire pressure sensor module 70 is in powered-off mode 90. At a query block 116, a determination is made as to whether the device is moving. In this example, the device is tire 48 of vehicle 20 (FIG. 1). When the device (e.g., tire 48) is not moving, process 112 loops back to block 114 so that switch element 74 remains in the open first state 92 and tire pressure sensor module 70 remains in powered-off mode 90.

When a determination is made at query block 116 that the device (e.g., tire 48) is moving, process control proceeds to a block 118. At block 118, electrical energy 96 is generated at power generation apparatus 72. A block 120 is performed in cooperation with block 118. At block 120, the electrical energy 96 generated by power generation apparatus 72 is utilized to place switch element 74 in the closed second state 98. In turn, a block 122 is performed when switch element 74 is switched to the closed second state 98 so that electric power 78 is provided to tire pressure sensor module 70. At block 122, tire pressure sensor module 70 is placed in powered-on mode 100 so that tire pressure sensor module 70 can perform its functions such as sensing the tire's pressure, processing the pressure signal, and subsequently transmitting an output signal 80 via an antenna 82 to central controller system 64.

At a query block 124, a determination is made as to whether the device is moving. In this example, motion of the device is "detected" when power generation apparatus 72 is generating electrical energy 96. When the device (e.g., tire 48) is still moving (e.g., power generation apparatus 72 is still providing electrical energy 96 to switch element 74 via timing element 110), process 112 loops back to block 122 so that switch element 74 remains in the closed second state 98, tire pressure sensor module 70 remains in powered-on mode 100, and tire pressure sensor module 70 continues to perform its functions.

Alternatively, when a determination is made at query block 124 that the device (e.g., tire 48) is motionless, process 112 proceeds to a query block 126. At query block 126, timing element 110 monitors the duration of time during which the device is motionless. Of course, as discussed above, timing element 110 may be an energy storage reservoir or capacitor. Thus, timing element 110 "monitors" the duration of time during which the device is motionless by simply discharging in order to provide electrical energy 96 to switch element 74. Thus, while switch element 74 is being provided electrical energy 96 from timing element 110 (i.e., a timing threshold is not exceeded), process 112 loops back to block 122 so that switch element 74 remains in the closed second state 98, tire pressure sensor module 70 remains in powered-on mode 100, and tire pressure sensor module 70 continues to perform its functions.

However, when a determination is made at query block 126 that the timing threshold is exceeded, process 112 proceeds to a block 128. That is, a determination is made at query block 126 that the timing threshold is exceeded when timing element 110, as an energy storage reservoir or capacitor, is discharged and cannot provide sufficient electrical energy 96 to switch element 74.

At block 128, the generation of electrical energy 96 at power generation apparatus 72 has discontinued and timing element 110 has discharged. In response to the discontinuation of generating electrical energy 96 for a duration of time exceeding the timing threshold (the delay provided by discharging timing element 110), switch element 74 returns to the open first state 92. A return of switch element 74 to first state 92 prevents electrical communication of power storage device 76 with tire pressure sensor module 70, thus preventing provision of electrical power 78 to tire pressure sensor module 70 so that tire pressure sensor module 70 returns to powered-off mode 90. Thereafter, battery power conservation process 112 loops back to block 114 so that switch element 74 remains in the open first state 92 and tire pressure sensor module 70 remains in the fully powered-off mode 90 until motion is once again detected.

The flowchart presented in FIG. 4 is provided for illustrative purposes. It is to be understood that certain ones of the process blocks depicted in FIG. 4 may be performed in parallel with each other or with performing other processes. In addition, it is to be understood that the particular ordering of the process blocks depicted in FIG. 4 may be modified, while achieving substantially the same result. Accordingly, such modifications are intended to be included within the scope of the inventive subject matter.

Low power consumption is a desirable feature in battery operated devices. In TPMS, low power consumption of the tire pressure sensor modules installed within vehicular tires enables a more cost effective, lighter, and smaller module through the selection of a smaller battery size. On average, a vehicle is parked or stored approximately ninety percent of the time. In conventional TPMS systems, each tire pressure sensor module wakes up and periodically transmits a pressure signal to the central controller system regardless of whether the vehicle is moving. By way of example, when a motion detector (e.g., acceleration sensor) in a tire pressure sensor module does not detect vehicular motion, then the duty cycle of the transmission of the pressure signal may be low (e.g., once every few minutes). When the motion detector detects that the vehicle is in motion, then the duty cycle of transmission of the pressure signal is relatively high (e.g., once every thirty seconds). Thus, the power consumption during the parked/stored time may account for approximately forty percent of the total power consumed by the tire pressure sensor module over its lifetime. In this configuration that includes the power generation apparatus (i.e., energy harvester) and switch element in which the tire pressure sensor module is in a fully powered-off mode when the vehicle is not moving, the service life of the power storage device (i.e., battery) may be extended by approximately forty percent.

In summary, embodiments disclosed herein entail a system that includes a power generation apparatus, a system (such as a tire pressure monitoring system) located inside a tire of a vehicle that includes the power generation apparatus, and a method of conserving electrical power within a system installed in a device. An embodiment of a system in a device comprises an electronic module configured to perform a function associated with the device, a power generation apparatus for generating electrical energy in response to motion of the device, and a switch element interposed between the electronic module and the power generation apparatus. The switch element is configured to switch from a first state to a second state when the power generation apparatus generates the electrical energy, wherein the electronic module is in a powered-off mode whenever the switch element is in the first state, and the electronic module is switched to a powered-on mode whenever the switch element is in the second state.

In an example, the system further comprises a power storage device. When the switch element is in the second state, the power storage device is in electrical communication with the electronic module to provide electric power to the electronic module in the powered-on mode.

In an example, when the switch element is in the first state, the power storage device is disconnected from the electronic module so that the electronic module is prevented from utilizing the electric power from the power storage device.

In an example, the switch element does not utilize the electric power from the power storage device when the switch element is in either of the first and second states.

In an example, a portion of the electrical energy generated by the power generation apparatus is stored to the power storage device or to a secondary power storage device to supplement the electric power provided by the power storage device to the electronic module.

In an example, when the device is motionless, the power generation apparatus does not generate electrical energy and the switch element is unpowered in the first state.

In an example, the electronic module comprises a motion detector configured to determine whether the device is moving or the device is motionless and a timing element in communication with the motion detector. While the electronic module is in the powered-on mode and when a duration of time during which the device is motionless exceeds a timing threshold, the timing element is configured to signal the switch element to return to the first state to cause the electronic module to enter the powered-off mode.

In an example, the switch element remains in the second state to cause the electronic module to remain in the powered-on mode whenever the motion detector determines that the device is moving.

In an example, the device is a tire of a vehicle, and the electronic module comprises a tire pressure sensor module for monitoring an air pressure in the tire and producing a tire pressure signal indicative of the air pressure when the tire pressure sensor module is in the powered-on mode.

An embodiment of a system for installation inside a tire of a vehicle comprises a tire pressure sensor module for monitoring an air pressure, a power generation apparatus for generating electrical energy in response to motion of the apparatus, and a switch element interposed between the tire pressure sensor module and the power generation apparatus. The switch element is configured to switch from a first state to a second state when the power generation apparatus generates the electrical energy, wherein the tire pressure sensor module is in a powered-off mode whenever the switch element is in the first state, and the tire pressure sensor module is switched to a powered-on mode whenever the switch element is in the second state. The system further comprises a power storage device, wherein when the switch element is in the second state, the power storage device is in electrical communication with the tire pressure sensor module to provide electric power to the tire pressure sensor module in the powered-on mode, and the tire pressure sensor module is configured to produce a tire pressure signal indicative of the air pressure when the tire pressure sensor module is in the powered-on mode.

In an example, when the switch element is in the first state, the power storage device is disconnected from the sensor module so that the sensor module is prevented from utilizing the electric power from the power storage device.

In an example, the switch element does not utilize the electric power from the power storage device when the switch element is in either of the first and second states.

In an example, when the tire is motionless, the power generation apparatus does not generate electrical energy and the switch element is unpowered in the first state.

In an example, the tire pressure sensor module comprises a motion detector configured to determine whether the tire is motionless; and a timing element in communication with the motion detector. While the tire pressure sensor module is in the powered-on mode and when a duration of time during which the tire is motionless exceeds a timing threshold, the timing element is configured to signal the switch element to return to the first state to cause the tire pressure sensor module to enter the powered-off mode.

In an example, the switch element remains in the second state to cause the tire pressure sensor module to remain in the powered-on mode whenever the motion detector determines that the tire is moving.

An embodiment of a method of conserving electrical power within a system installed in a device, the system including an electronic module, a power generation apparatus, and a switch element interposed between the electronic module and the power generation apparatus, wherein the method comprises generating electrical energy at the power generation apparatus in response to motion of the device, utilizing the electrical energy generated by the power generation apparatus to switch the switch element from a first state to a second state, wherein the electronic module is in a powered-off mode whenever the switch element is in the first state, and placing the electronic module in a powered-on mode when the switch element is in the second state to provide the electrical power to the electronic module.

In an example, the placing operation comprises providing the electronic module with the electrical power only when the switch element is in the second state. The method further comprises preventing provision of the electrical power to the electronic module when the switch element is in the first state.

In an example, the system further includes a power storage device. The method further comprises preventing electrical communication of the power storage device with the electronic module when the switch element is in the first state to place the electronic module in the powered-off mode and inhibit provision of the electric power from the power storage device to the electronic module. The method further comprises enabling electrical communication of the power storage device with the electronic module when the switch element is in the second state. The method further comprises providing the electrical power to the electronic module from the power storage device to place the electronic module in the powered-on mode.

In an example, the method further comprises while the electronic module is in the powered-on mode, determining that the device is motionless. The method further comprises signaling the switch element to return to the first state when a duration of time during which the tire is motionless exceeds a timing threshold to cause the tire pressure sensor module to enter the powered-off mode.

In an example, the device is a tire of a vehicle and the electronic module comprises a tire pressure sensor module for monitoring an air pressure in the tire. The method further comprises producing a tire pressure signal indicative of the air pressure when the tire pressure sensor module in in the powered-on mode.

Accordingly, a power generation apparatus in the form of an energy harvesting device is employed to convert motion/vibrational energy into electrical energy in response to motion of the device. This electrical energy is utilized to power a switch element which, in turn, is used to power up the system from a fully powered-off mode. After a predefined period when the energy harvesting device is no longer generating electrical energy (i.e., the device is no longer in motion), the switch element is de-energized which, in turn, removes power from the system so that it returns to the fully powered-off mode. Accordingly, the system is only in a powered-on mode when it is needed, thereby potentially extending the service life of a battery within the system.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. A system in device, comprising:
an electronic module (70) configured to perform a function associated with the device (48 - 54, 60);
a power generation apparatus (72) for generating electrical energy (96) in response to motion of the device; and
a switch element (74) interposed between the electronic module and the power generation apparatus, the switch element being configured to switch from a first state (92) to a second state (98) when the power generation apparatus generates the electrical energy, wherein the electronic module is in a powered-off mode (90) whenever the switch element is in the first state, and the electronic module is switched to a powered-on mode (100) whenever the switch element is in the second state.

2. The system of claim 1, further comprising a power storage device (76), wherein when the switch element is in the second state, the power storage device is in electrical communication with the electronic module to provide electric power to the electronic module in the powered-on mode.

3. The system of claim 2, wherein when the switch element is in the first state, the power storage device is disconnected from the electronic module so that the electronic module is prevented from utilizing the electric power from the power storage device.

4. The system of claim 2 or claim 3, wherein the switch element does not utilize the electric power from the power storage device when the switch element is in either of the first and second states.

5. The system of any one of the claims 2 to 4, wherein a portion of the electrical energy generated by the power generation apparatus is stored to the power storage device or to a secondary power storage device (94) to supplement the electric power provided by the power storage device to the electronic module.

6. The system of any preceding claim, wherein when the device is motionless, the power generation apparatus does not generate electrical energy and the switch element is unpowered in the first state.

7. The system of any preceding claim, wherein the electronic module comprises:
a motion detector configured to determine whether the device is moving or the device is motionless; and
a timing element (110) in communication with the motion detector, wherein while the electronic module is in the powered-on mode and when a duration of time during which the device is motionless exceeds a timing threshold, the timing element is configured to signal the switch element to return to the first state to cause the electronic module to enter the powered-off mode.

8. The system of claim 7, wherein the switch element remains in the second state to cause the electronic module to remain in the powered-on mode whenever the motion detector determines that the device is moving.

9. The system of any preceding claim, wherein the device is a tire (48 - 54, 60) of a vehicle (20), and the electronic module comprises a tire pressure sensor module (70) for monitoring an air pressure in the tire and producing a tire pressure signal indicative of the air pressure when the tire pressure sensor module is in the powered-on mode.

10. A method of conserving electrical power within a system installed in a device (48 - 54, 60), the system including an electronic module (70), a power generation apparatus (72), and a switch element (74) interposed between the electronic module and the power generation apparatus, the method comprising:
generating (118) electrical energy (96) at the power generation apparatus in response to motion of the device;
utilizing (120) the electrical energy generated by the power generation apparatus to switch the switch element from a first state (92) to a second state (98), wherein the electronic module is in a powered-off mode (90) whenever the switch element is in the first state; and
placing (122) the electronic module in a powered-on mode (100) when the switch element is in the second state to provide the electrical power to the electronic module.

11. The method of claim 10, wherein:
the placing operation comprises providing (122) the electronic module with the electrical power only when the switch element is in the second state; and
the method further comprises preventing (114) provision of the electrical power to the electronic module when the switch element is in the first state.

12. The method of claim 10 or claim 11, wherein the system further includes a power storage device (76), and the method further comprises:
preventing electrical communication of the power storage device with the electronic module when the switch element is in the first state to place the electronic module in the powered-off mode and inhibit provision of the electric power from the power storage device to the electronic module;
enabling electrical communication of the power storage device with the electronic module when the switch element is in the second state; and
providing the electrical power to the electronic module from the power storage device to place the electronic module in the powered-on mode.

13. The method of any one of the claims 10 to 12 further comprising:
while the electronic module is in the powered-on mode, determining (116) that the device is motionless; and
signaling the switch element to return to the first state when a duration of time during which the tire is motionless exceeds a timing threshold to cause the tire pressure sensor module to enter the powered-off mode.

14. The method of claim 13, wherein the device is a tire (48 - 54, 60) of a vehicle (20), the electronic module comprises a tire pressure sensor module (70) for monitoring an air pressure in the tire, and the method further comprises producing a tire pressure signal indicative of the air pressure when the tire pressure sensor module in in the powered-on mode.

15. A system for installation inside a tire of a vehicle comprising:
a tire pressure sensor module (70) for monitoring an air pressure;
a power generation apparatus (72) for generating electrical energy in response to motion of the apparatus;
a switch element (74) interposed between the tire pressure sensor module and the power generation apparatus, the switch element being configured to switch from a first state (92) to a second state (98) when the power generation apparatus generates the electrical energy, wherein the tire pressure sensor module is in a powered-off mode (90) whenever the switch element is in the first state, and the tire pressure sensor module is switched to a powered-on mode (100) whenever the switch element is in the second state; and
a power storage device (76), wherein when the switch element is in the second state, the power storage device is in electrical communication with the tire pressure sensor module to provide electric power to the tire pressure sensor module in the powered-on mode, and the tire pressure sensor module is configured to produce a tire pressure signal indicative of the air pressure when the tire pressure sensor module is in the powered-on mode.
